Europäisches Patentamt

European Patent Office

Office européen des brevets

(11) Publication number: **0 394 774 B1**

# EUROPEAN PATENT SPECIFICATION

(45) Date of publication of patent specification: **02.11.95**

(51) Int. Cl.⁶: **C09J 131/04**, //(C09J131/04, 133:12),C09J129:04

(21) Application number: **90107072.2**

(22) Date of filing: **12.04.90**

(54) **Improved woodworking adhesives based on multistage emulsion polymer.**

(30) Priority: **26.04.89 US 343780**

(43) Date of publication of application:
**31.10.90 Bulletin 90/44**

(45) Publication of the grant of the patent:
**02.11.95 Bulletin 95/44**

(84) Designated Contracting States:
**BE DE DK FR GB IT NL SE**

(56) References cited:

DERWENT ACCESSION NO. 75-26 723W, London, Abstract & JP-B-75 007 111

DERWENT ACCESSION No. 88-034 575, London. Abstract

DERWENT ACCESSION NO. 88-193 720, London, Abstract & JP-A-63 130 665

(73) Proprietor: **National Starch and Chemical Investment Holding Corporation
501 Silverside Road
Wilmington, Delaware 19809 (US)**

(72) Inventor: **Mudge, Paul R.
23 Mulford Lane
Belle Mead,
New Jersey 08507 (US)**
Inventor: **Hespe, George
219 Wescott Road
Neshanic Station,
New Jersey 08853 (US)**

(74) Representative: **Hagemann, Heinrich, Dr. rer. nat., Dipl.-Chem. et al
Patentanwälte
Hagemann & Kehl
Postfach 86 03 29
D-81630 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

**Description**

The present invention is directed to improved woodworking adhesives prepared from multistage emulsions polymers, the adhesives being characterized by a superior degree of water resistance.

Aqueous emulsions of vinyl acetate homo- or copolymers are widely used in formulating wood adhesives wherein bond strength, fast setting, colorless glue lines and ease of application are desired. In order to improve water resistance and other properties of these adhesives they are generally formulated with other resins such as resorcinol-formaldehyde, urea-formaldehyde, melamine-formaldehyde, phenol-formaldehyde resins and trimethylol phenol oligomer or with fusion aids, such as tetrahydrofurfuryl alcohol or ethylene glycol diacetate. These pre-formulated adhesives may then be catalyzed with various acidic metal salts as is known in the art. These adhesive systems are described, for example, in US-A-3,301,809; 3,563,851; 3,433,701; 3,041,301; 4,474,915; and 4,687,809.

While such formulated vinyl acetate based adhesives provide adequate water resistance for plywood and finger jointed lumber constructions tested at room temperature, under vacuum-pressure soaks and in boiling water, none of the current vinyl acetate adhesives meet ASTM standards for exterior lumber, especially for ASTM D-3110 for edge glued lumber. This is illustrated by the requirements for these tests on pine lumber, as well as the values obtained using conventional formulated crosslinked polyvinyl acetate adhesives (PVA) presented in Table I.

Table I

| Finger-Jointed Pine | | | |
|---|---|---|---|
| | Room Temp. | Pressure Soaks | Boils |
| Typical PVA | 314.9 kg/cm$^2$ (4498 psi), 96% WF | 168.0 kg/cm$^2$ (2400 psi), 68% WF | 154.0 kg/cm$^2$ (2200 psi), 60% WF |
| Requirements | 140.0 kg/cm$^2$ (2000 psi), 60% WF | 112.0 kg/cm$^2$ (1600 psi), 50% WF | 112.0 kg/cm$^2$ (1600 psi), 50% WF |
| Edge Glued Pine | | | |
| Typical PVA | 98.8 kg/cm$^2$ (1411 psi), 97% WF | 19.3 kg/cm$^2$ (275 psi), 20% WF | 21.0 kg/cm$^2$ (300 psi), 15% WF |
| Requirements | 47.4 kg/cm$^2$ (678 psi), 60% WF | 39.6 kg/cm$^2$ (565 psi), 50% WF | 39.6 kg/cm$^2$ (565 psi), 50% WF |

We have now found that superior water resistant emulsions for use in woodworking adhesives may be prepared by a two-stage polymerization procedure wherein a first stage is prepared from a relatively low Tg vinyl acetate polymer and a second stage from a higher Tg methyl methacrylate polymer thereby combining the advantageous wetting or rheological as well as film forming properties of the polyvinyl alcohol stablized vinyl acetate copolymer with the reduced thermoplasticity and high temperature and water resistance of the higher Tg methyl methacrylate copolymer. The resultant formulated adhesives pass not only the finger jointed lumber requirements but also the ASTM D-3110 requirements for edge glued lumber.

The two stage polymerization utilized herein may be carried out using a variety of specific modifications which are generally referred to as producing "core-shell" or "interpenetrating network" type polymers. Such polymerization procedures are described, for example, in US-A-3,671,610; 3,833,404; and 4,616,057, the disclosures of which are incorporated herein by reference. JP-A-75 007 11 discloses a process of producing a polymer emulsion suitable for coating compositions by two stage polymerization.

More specifically, a vinyl acetate polymer is prepared using conventional batch, semi-batch or continuous emulsion polymerization procedures such as taught in US-A-2,754,280; 2,795,564 and 3,732,184 chosen so as to provide a first-stage polymer having a Tg of +10 to +40°C, preferably 30 to 40°C. While vinyl acetate will comprise the predominant portion of the polymer, up to about 25% of other copolymerizable comonomers may be employed in specific amounts depending on the particular comonomer so as to maintain the required Tg range. Suitable comonomers include, for example, other vinyl esters (e.g., vinyl propionate), vinyl ethers, fumarates, maleates, ethylene, acrylates, etc.

The methacrylate ester which comprises the major portion of the second stage may be copolymerized with minor amounts of acrylate, other methacrylate, (meth)acrylonitrile or styrene comonomers selected to have a Tg within the range of +50 to +120°C, preferably about 80 to 120°C. Suitable copolymers within this Tg range may be prepared, for example, from copolymers of $C_1$-$C_4$ acrylates or $C_2$-$C_4$ methacrylates with methyl methacrylate or other higher Tg methacrylates.

In addition, a pre-crosslinking monomer and/or a post-crosslinking monomer may optionally be present in the second stage of the polymerization depending upon the specific performance required.

Suitable pre-crosslinking agents include alkylene glycol diacrylates and methacrylates, such as ethylene glycol diacrylate, 1,3-butylene glycol diacrylate, propylene glycol diacrylate, triethylene glycol dimethacrylate etc., 1,3-glycerol dimethacrylate, 1,1,1-trimethylol propane dimethacrylate, 1,1,1-trimethylol ethane diacrylate, pentaerythritol trimethacrylate, sorbitol pentamethacrylate, methylenebisacrylamide, methylene bismethacrylamide, divinyl benzene, vinyl methacrylate, vinyl crotonate, vinyl acrylate, divinyl adipate; also di- and tri-allyl compounds, such as triallyl cyanurate, triallyl isocyanurate, diallyl phthalate, allyl methacrylate, allyl acrylate, diallyl maleate, diallyl fumarate, diallyl itaconate, diallyl malonate, diallyl carbonate, triallyl citrate, triallyl aconitate; also divinyl ether, ethylene glycol divinyl ether and the like. The amount of active crosslinking agent in each stage of the polymer emulsion of the present invention may vary from about 0.01 to 0.5 percent, preferably from about 0.05 to 0.25 percent by weight of the polymer.

Examples of post-crosslinking agents are: N-alkylolamides of alpha, beta ethylenically unsaturated carboxylic acids having 3-10 carbons, such as N-methylol acrylamide, N-ethanol acrylamide, N-propanol acrylamide, N-methylol methacrylamide, N-ethanol methacrylamide, N-methylol maleamide, N-methylol maleamide, N-methylol maleamic acid, N-methylol maleamic acid esters; the N-alkylol amides of the vinyl aromatic acids, such as N-methylol-p-vinylbenzamide and the like; also N-(alkoxymethyl) acrylates and methacrylates, where the alkyl group has from 1-8 carbon atoms, such as N-(methoxymethyl) acrylamide, N-(butoxymethyl) acrylamide, N-(methoxymethyl) methacrylamide, N-(butoxymethyl) allyl carbamate and N-(methoxymethyl) allyl carbamate, and mixtures of these monomers with allyl carbamate, acrylamide or methacrylamide. If present, these monomers are used in amounts of 0.1 to 6% by weight.

Olefinically unsaturated acids may also be employed in either stage of the polymerization to improve adhesion and to contribute additional heat resistance. These acids include the alkenoic acids having from 3 to 6 carbon atoms, such as acrylic acid, methacrylic acid, crotonic acid; alkenedioic acids, e.g., itaconic acid, maleic acid or fumaric acid or mixtures thereof in amounts sufficient to provide up to about 4 parts, preferably 0.5 to 2.5 parts, per 100 parts of major monomer.

In addition, certain copolymerizable monomers which assist in the stability of the copolymer emulsion, e.g., vinyl sulfonic acid and 2-acrylamido-2-methylpropane sulfonic acid are used herein as latex stabilizers. These stabilizers are added in amounts of from about 0.2 to 3% by weight of the monomer mixture.

Conventional batch, semi-batch or continuous emulsion polymerization procedures may be utilized herein.

Suitable as polymerization catalysts are the water-soluble free-radical-formers generally used in emulsion polymerization, such as hydrogen peroxide, sodium persulfate, potassium persulfate and ammonium persulfate, as well as tert-butyl hydroperoxide, in amounts of between 0.01 and 3% by weight, preferably 0.01 and 1% by weight based on the total amount of the emulsion. They can be used alone or together with reducing agents such as sodium formaldehyde-sulfoxylate, ferrous salts, sodium dithionite, sodium hydrogen sulfite, sodium sulfite, sodium thiosulfate, as redox catalysts in amounts of 0.01 to 3% by weight, preferably 0.01 to 1% by weight, based on the total amount of the emulsion.

The free-radical-formers can be charged with the protective colloid or be added during the polymerization in doses.

The polymerization is carried out at a pH of between 2 and 7, preferably between 3 and 5. In order to maintain the pH range, it may be useful to work in the presence of customary buffer systems, for example, in the presence of alkali metal acetates, alkali metal carbonates, alkali metal phosphates. Polymerization regulators, like mercaptans, aldehydes, chloroform, ethylene chloride and trichloroethylene, can also be added in some cases.

The polymerization is carried out using a protective colloid as the stabilizing agent. Generally, the colloid chosen is a standard grade of polyvinyl alcohol typically employed in such polymerizations. In general, this colloid is used at levels of 0.05% to 4% by weight based on the total emulsion. The polyvinyl alcohol may be added, in its entirety, to the initial charge to the polymerization zone or a portion of the emulsifier, e.g. from 90 to 25 percent thereof, can be added continuously or intermittently during polymerization.

The polymerization reaction is generally continued until the residual vinyl acetate, monomer content is below 1%. The completed reaction product is then allowed to cool to about room temperature, while sealed from the atmosphere.

To the above described vinyl acetate copolymer is added a second monomeric system comprising the methyl methacrylate monomer together with any optional pre- and post-crosslinking agents which may be utilized.

The ratio of the first stage polymer to the second stage polymer may vary from about 10:1 to 10:6 and is preferably in the range of 10:3 to 10:4.

All of the second monomeric mixtures may be added directly to the first polymer emulsion and the second polymerization begun or the second monomeric mixture may be added gradually as the polymerization reaction proceeds. The latices are produced and used at relatively high solids contents, e.g. up to about 60%, although they may be diluted with water if desired. The preferred latices will contain about from 45 to 55, and, most preferred about 50% weight percent solids.

The emulsions may be used in any conventional woodworking adhesive compositions and formulated with such additives as are commonly used in the production of these adhesives. Such additives include formaldehyde resins such as resorcinol formaldehyde, urea formaldehyde, melamine formaldehyde and phenol formaldehyde; as well as B-stage phenolic resins, such as trimethylol phenol oligomer, prepared by means of any conventional phenolaldehyde condensation reaction which may be added in an amount of 1 to 20%, by weight, based on total emulsion, preferably 3 to 10%, by weight. The adhesives may also be formulated with 1 to 7%, by weight, polymer solids of a fusion aid such as tetrahydrofurfuryl alcohol, ethylene glycol diacetate, and ethylene glycol monoethyl ether acetate as taught in US-A-4,474,915, the disclosure of which is incorporated herein by reference.

The addition of acidic, metal salt curing agents may also be desired in order to accelerate the cure of the formulated adhesive. The preferred curing agents for use herein comprise acidic, metal salts selected from the group consisting of chromic nitrate, chromic perchlorate, aluminum nitrate, aluminum chloride, zinc nitrate, and para-toluene sulfonic acid. The proportion of acidic, metal salt curing agent which is added will depend upon the rate of cure which is desired in the final product but a practical range has been found to be from about 0.003 to 0.12 gram equivalents of curing agent (anhydrous basis) for each 100 grams of the total weight of the blend of the adhesive composition.

If fusion aids are used in the formulation, it may also be desirable to add cross-linking inhibitors such as are described in US-A-4,085,074 and re-issued as US-A-No. 30,576. Typical inhibitors include ammonia, alkyl amines (e.g. triethyl amine), and alkylol amines (e.g. triethanol amine and N-methylethanol amine). When used, they are added ordinarily in amounts such that the mole ratio of the inhibitor to curing agent ranges from 0.1 to 1.7. They may be added to the vessel at the end of the polymerization reaction or they may be post added prior to or with the curing agent. Their addition improves the storage stability of the adhesives.

In preparing the adhesive compositions of this invention, it is merely necessary first to combine, by mixing, the aqueous emulsion polymer with the additive(s).

The following examples are given to illustrate the present invention, but it will be understood that they are intended to be illustrative only and not limitative of the invention. In the examples, all parts are by weight and all temperatures in degrees Celsius unless otherwise noted.

EXAMPLES 1 - 18

Stage 1

The following ingredients were charged to a four neck two liter flask equipped with a mechanical stirrer, condenser, addition funnel, thermometer and $N_2$ gas inlet

| Ingredients | Amounts (g) |
|---|---|
| Water | 345 |
| Ammonium persulfate | 0.45 |
| Ammonium hydroxide (28% sol) | 0.05 |
| Vinol 523 (88% PVOH-medium molecular weight) | 16.5 |
| Vinyl acetate | 10 |

The temperature was raised under a nitrogen atmosphere to 72°C. After 5-10 minutes at 72°C the following ingredients were added as a pre-emulsified monomer mixture over 3 hrs at 72-75°C.

EP 0 394 774 B1

| Ingredients | Amounts(g) |
|---|---|
| Vinyl acetate | 450 |
| N-methylol acrylamide (48% sol) | 31 |
| Vinol 523 | 0.5 |
| Water | 142.5 |

At the end of the monomer slow addition the temperature was allowed to exotherm to 90°C, held for 20 minutes then cooled to 60°C for stage 2.

Stage 2 - Slow Addition Process used in Examples 1-17

The emulsion from stage 1 was cooled to 60°C and a mixture of 15g Triton X305 surfactant in 170g water was added with stirring. Then a monomer mixture of 150g methyl methacrylate, 4.5g of isobutoxy methacrylamide and 0.75 triallyl cyanurate was added over a period of 90 minutes in a uniform addition mode. Concurrent with the monomer addition 1.5g of tert-butylhydroperoxide in 25g of water and 1g of sodium formaldehyde sulphoxalate in 25g of water were added over 120 minutes. At the finish of these additions the emulsion was cooled to room temperature.

Stage 3 - Batch Equilibration Process used in Example 18

The stage 1 emulsion was cooled to 60°C and then a mixture of 15g Triton X305 surfactant in 170g of water was added with stirring. Secondly, a monomer mixture of 150g methylmethacrylate and 0.75g diallyl maleate was added over 15 minutes with continual agitation followed by an equilibration period of 60 minutes at 60°C. After the equilibration period, the addition of 1.5g tert-butylhydroperoxide in 25g water and 1g sodium formaldehyde sulphoxalate in 25g water was started and completed over 60 minutes. Once the initiator additions were finished the emulsion was cooled to room temperature.

The resulting emulsions were then tested using the following procedures:

Test Procedures

In all cases the polymer emulsions were catalysed with 5% of a 32° Be aluminum chloride solution. The construction was edge glued pine bonded in a radio frequency (RF) press. After aging for 7 days, the construction was cut into individual specimens, and put through one of the following durability cycles as required by ASTM D-3110.

Room Temperature - Specimens were broken in compression shear with no further aging.

Vacuum-Pressure Soaks - Specimens were submerged in water. A 15 MM vacuum was drawn for 30 minutes, followed by 5.27 kg/cm$^2$ (75 psi) hydrostatic water pressure for 30 minutes. Specimens were broken in compression shear while still wet.

Boils - Specimens were submerged in boiling water for 4 hours, then oven dried for 20 hours, then boiling water for another 4 hours. They were then cooled to room temperature in cold water and broken while wet.

The results of the testing, shown in Tables 3 and 4, indicate the superior results achieved using the adhesives of the invention. Thus, the results presented in Table 4 clearly show that the adhesives described herein pass the commercial requirements defined in ASTM D-3110 reproduced in Table 1 above. Thus, in addition to readily passing the finger jointed lumber standards, as do the currently utilized polyvinyl acetate adhesives, these adhesives also meet the far more stringent edge-glued requirements.

Further, the results presented in Examples 1, 2 and 3 of Table 3 show improvements achieved using various levels of MMA/IBMA/TAC in the second stage with 30 parts MMA on 100 parts of first stage being optimum for use on pine.

Example 2 shows that NMA in first stage is more beneficial than the use of IBMA only in the second stage as in Example 7.

Examples 4, 5, 6 show the effect of lower Tg second stage (1/1 ratio of EA/MMA) with only 50 parts second stage showing improvement over the control crosslinked polyvinyl acetate. The results indicate that lower levels of higher Tg second stage are more effective than higher levels of lower Tg second stage (MMA = +100°C Tg; 50/50 EA/MMA = +60 Tg; VA = +30 Tg)

Examples 8 and 9 also illustrate the effect of the lower Tg ethyl acrylate (EA) monomer in the first stage which is less effective in that it detracts from the overall performance even with high levels of second stage reinforcement.

5

Examples 10, 11, 12 show effect of post crosslinking in the second stage which, although not essential for strength (PSI at break), does aid in % wood failure with NMA and IBMA being similar. Examples 13 and 14 show that pre-crosslinking in either the first or in the second stage also is not necessary for these improvements.

Table 4 shows the edge glued testing results for formulated adhesives. In this table the addition to the control of 6% trimethylol phenol oligomer (TMP) which is a plasticizer and post crosslinker helps in boiling water resistance (from 14 to 21 kg/cm$^2$ (200 to 300 psi)), however as shown in Example 2, the TMP effect is much larger giving data which passed the D3110 specification for edge glued lumber. The control emulsion plus TMP does not reach performance of two-stage without TMP.

In contrast, Example 17 shows that the simplest polymer system with methyl methacrylate homopolymer in the second stage, when formulated with TMP, passes the D3110 specification for edge glued lumber unlike the control emulsion.

Furthermore, improved results would be achieved utilizing the two stage polymerization procedure without crosslinking monomer in either stage over similar standard adhesives prepared using a one stage polymerization.

## TABLE 2

| Example | First Stage of Monomers | | | Major Monomers % of First Stage | | Pre and Post Xlinking Monomers % on Second Stage Total | | | |
|---|---|---|---|---|---|---|---|---|---|
| | ViAc | NMA | EA | MMA | EA | TAC | DAM | n-IBMA | NMA |
| Control | 100 | 3.4 | – | – | – | – | – | – | – |
| 1 | 100 | 3.4 | – | 10 | – | 0.5 | – | 3 | – |
| 2 | 100 | 3.4 | – | 30 | – | 0.5 | – | 3 | – |
| 3 | 100 | 3.4 | – | 50 | – | 0.5 | – | 3 | – |
| 4 | 100 | 3.4 | – | 5 | 5 | 0.5 | – | 3 | – |
| 5 | 100 | 3.4 | – | 15 | 15 | 0.5 | – | 3 | – |
| 6 | 100 | 3.4 | – | 25 | 25 | 0.5 | – | 3 | – |
| 7 | 100 | – | – | 30 | – | 0.5 | – | 3 | – |
| 8 | 80 | 3.4 | 20 | 60 | – | 0.5 | – | 3 | – |
| 9 | 80 | 3.4 | 20 | – | – | – | – | – | – |
| 10 | 100 | 3.4 | – | 30 | – | 0.25 | – | – | – |
| 11 | 100 | 3.4 | – | 30 | – | – | – | 3 | – |
| 12 | 100 | 3.4 | – | 30 | – | 0.5 | – | – | 3 |
| 13 | 100 | 3.4 | – | 30 | – | – | – | 3 | – |
| 14 | 100 | 3.4 | – | 30 | – | – | – | – | 3 |
| 15 | 100 | 3.4 | – | 30 | – | 0.5 | – | – | – |
| 16 | 100 | 3.4 | – | 30 | – | – | 0.5 | – | – |
| 17 | 100 | 3.4 | – | 30 | – | – | – | – | – |
| 18 | 100 | 3.4 | – | 30 | – | – | 0.15 | – | – |

Control = commmercially utilized PVA stabilized NMA-crosslinked polyvinyl acetate  
ViAc = Vinyl acetate  
NMA = N-methylol acrylamide  
EA = Ethyl acrylate  
MMA = Methyl methacrylate  

TAC = Triallyl cyanurate  
DAM = Diallyl maleate  
n-IBMA = N-(Isobutoxymethyl) acrylamide

EP 0 394 774 B1

## TABLE 3

UNFORMULATED ADHESIVES – ASTM D3110 EXTERIOR EDGE GLUED PINE CONSTRUCTIONS

| Example | Room Temperature | | Pressure Soaks | | Boils | |
|---|---|---|---|---|---|---|
| | $kg/cm^2$ (PSI) | %WF | $kg/cm^2$ (PSI) | %WF | $kg/cm^2$ (PSI) | %WF |
| Pine Wood | 86.24 (1232) | 100 | – | – | 35.72 (508) | 100 |
| Control | 99.20 (1411) | 97 | 33.96 (483) | 22 | 14.41 (205) | 12 |
| 1 | 96.74 (1376) | 100 | 41.48 (590) | 67 | 28.69 (408) | 17 |
| 2 | 98.71 (1404) | 96 | 41.41 (589) | 77 | 28.69 (408) | 49 |
| 3 | 100.3 (1427) | 94 | 40.50 (576) | 61 | 24.54 (349) | 24 |
| 4 | 86.34 (1228) | 99 | 34.10 (485) | 43 | 13.57 (193) | 3 |
| 5 | 88.03 (1252) | 99 | 34.10 (485) | 24 | 13.71 (195) | 5 |
| 6 | 89.43 (1272) | 96 | 36.42 (518) | 48 | 11.67 (366) | 22 |
| 7 | 76.92 (1094) | 92 | 28.76 (409) | 35 | 22.71 (323) | 35 |
| 8 | 107.4 (1527) | 92 | 42.96 (611) | 54 | 14.76 (210) | 13 |
| 9 | 97.10 (1381) | 91 | 16.24 (231) | 1 | 2.18 (31) | 0 |
| 10 | 105.1 (1495) | 96 | 41.06 (584) | 21 | 28.05 (399) | 8 |
| 11 | 89.01 (1266) | 97 | 41.62 (592) | 74 | 25.31 (360) | 35 |
| 12 | 84.30 (1199) | 95 | 36.63 (521) | 78 | 21.09 (300) | 24 |
| 13 | 79.66 (1133) | 96 | 41.41 (589) | 76 | 21.30 (303) | 32 |
| 14 | 89.71 (1276) | 95 | 38.46 (547) | 69 | 27.21 (387) | 29 |
| 18 | 88.03 (1252) | 97 | 40.15 (571) | 64 | 28.05 (399) | 50 |

Control = commercially utilized PVA stabilized NMA-crosslinked polyvinyl acetate

## TABLE 4

FORMULATED ADHESIVES – ASTM D3110 EXTERIOR EDGE GLUED PINE CONSTRUCTIONS

| Example | Formulation | Room Temp. kg/cm2 (PSI) | %WF | Pressure Soaks kg/cm2 (PSI) | %WF | Boils kg/cm2 (PSI) | %WF |
|---|---|---|---|---|---|---|---|
| Pinewood | — | 86.62 (1232) | 100 | — | — | 35.72 (508) | 100 |
| Control (A) | — | 99.20 (1411) | 97 | 33.96 (483) | 22 | 44.41 (205) | 12 |
| Control | — | 103.9 (1478) | 96 | 33.68 (479) | 21 | 21.30 (303) | 27 |
| 2 | +6% TMP | 98.74 (1404) | 96 | 41.44 (589) | 77 | 28.69 (408) | 49 |
| 2 | +3% TMP | 89.36 (1271) | 100 | 41.13 (585) | 60 | 35.74 (509) | 79 |
| 2 | +6% TMP | 97.17 (1382) | 100 | 41.83 (595) | 66 | 36.07 (513) | 85 |
| 2 | +3% THFA | 110.5 (1572) | 97 | 43.34 (616) | 57 | 28.40 (404) | 24 |
| 2 | +6% THFA | 93.30 (1327) | 98 | 44.22 (629) | 70 | 32.48 (462) | 29 |
| 2 | +3% EGDA | 98.29 (1398) | 98 | 40.43 (575) | 73 | 28.35 (403) | 20 |
| 15 | +6% TMP | 106.4 (1513) | 94 | 45.70 (650) | 83 | 44.34 (588) | 85 |
| 16 | +6% TMP | 111.4 (1585) | 92 | 49.15 (699) | 93 | 35.74 (509) | 82 |
| 17 | +6% TMP | 102.9 (1464) | 94 | 45.42 (646) | 86 | 34.44 (561) | 91 |

TMP = Trimethylolphenolic oligomer
THFA = Tetrahydrofurfuryl alcohol
EGDA = Ethylene Glycol Diacetate

Control = commercially utilized PVA stabilized NMA-crosslinked polyvinyl acetate

## Claims

1. A woodworking adhesive comprising a stabilized two-stage emulsion polymer mixture wherein the first stage polymer comprises a polyvinyl alcohol stabilized polyvinyl acetate homo- or copolymer having a Tg within the range of +10 to +40°C and containing no pre-corsslinking monomer and the second stage polymer comprises a methyl methacrylate homo- or copolymer having a Tg of +50 to +120°C,

9

further characterized in that the ratio of the first stage polymer to the second stage polymer is within the range of 10:1 to 10:6.

2. The adhesive of Claim 1, wherein the second stage polymer has a Tg of 80 to 120°C., and wherein the ratio of the first stage polymer to second stage polymer is in the range of 10:3 to 10:4.

3. The adhesive of Claim 1, wherein the polyvinyl alcohol is present in an amount of 0.05 to 4% by weight of the total emulsion.

4. The adhesive of Claim 1 wherein there is additionally present in the emulsion polymer up to 4 parts by weight of an alkenoic or alkenedioic acid having from 3 to 6 carbon atoms per 100 parts of the monomers of the emulsion polymer.

5. A woodworking adhesive according to claim 1 characterized in that the first stage polymer comprises a polyvinyl acetate N-methylol acrylamide copolymer having a Tg within the range of +30 to 40°C, and the second stage polymer being methyl methacrylate - N-methylol acrylamide - triallyl cyanurate copolymer having a Tg of +100 to +120°C, with the ratio of the first polymer to the second polymer varying within a range of 10:3 to 10:4.

6. A woodworking adhesive according to claim 1 characterized in that the emulsion polymer is formulated with at least one member selected from the class consisting of formaldehyde resins, B-stage phenolic resins and fusion aids.

7. The woodworking adhesive of Claim 6, wherein there is also present an acid metal salt curing agent in an amount of from 0.003 to 0.12 gram equivalents per 100 grams of the adhesive.

**Patentansprüche**

1. Holzbearbeitungsklebstoff, umfassend ein stabilisiertes zweistufiges Emulsionspolymergemisch, bei dem das Erststufenpolymer ein Polyvinylalkohol-stabilisiertes Polyvinylacetathomo- oder -copolymer umfaßt, das eine Tg im Bereich von +10 bis +40°C aufweist und kein vorvernetzendes Monomer enthält, und das Zweitstufenpolymer ein Methylmethacrylathomo- oder copolymer mit einer Tg von +50 bis +120°C umfaßt, ferner dadurch gekennzeichnet, daß das Verhältnis von Erststufenpolymer zu Zweitstufenpolymer im Bereich von 10:1 bis 10: 6 liegt.

2. Klebstoff nach Anspruch 1, bei dem das Zweitstufenpolymer eine Tg von 80 bis 120°C aufweist, und bei dem das Verhältnis von Erststufenpolymer zu Zweitstufenpolymer im Bereich von 10:3 bis 10:4 liegt.

3. Klebstoff nach Anspruch 1, bei dem der Polyvinylalkohol in einer Menge von 0,05 bis 4 Gew.-%, bezogen auf die Gesamtemulsion, vorliegt.

4. Klebstoff nach Anspruch 1, bei dem im Emulsionspolymer auf 100 Teile Monomere des Emulsionspolymers zusätzlich bis zu 4 Gew.-Teile einer Alkensäure oder Alkendisäure mit 3 bis 6 Kohlenstoffatomen vorliegen.

5. Holzbearbeitungsklebstoff nach Anspruch 1, dadurch gekennzeichnet, daß das Erststufenpolymer ein Polyvinylacetat/N-Methylolacrylamid-Copolymer mit einer Tg im Bereich von +30 bis +40°C umfaßt, und das Zweitstufenpolymer ein Methylmethacrylat/N-Methylolacrylamid/Triallylcyanurat-Copolymer mit einer Tg von +100 bis +120°C ist, wobei das Verhältnis des Erststufenpolymers zum Zweitstufenpolymer innerhalb eines Bereich von 10:3 bis 10:4 variiert.

6. Holzbearbeitungsklebstoff nach Anspruch 1, dadurch gekennzeichnet, daß das Emulsionspolymer mit mindestens einem Vertreter der aus Formaldehyd-Harzen, B-Stufen-Phenolharzen und Verlaufshilfsmitteln bestehenden Klasse zubereitet ist.

7. Holzbearbeitungsklebstoff nach Anspruch 6, bei dem außerdem ein Härtungsmittel in Form eines sauren Metallsalzes in einer Menge von 0,003 bis 0,12 Grammäquivalenten pro 100 g Klebstoff vorliegt.

**Revendications**

1. Adhésif pour le travail du bois, comprenant un mélange de polymères en émulsion stabilisé, produit par polymérisation en deux étapes, dans lequel le polymère de première étape comprend un homo- ou copolymère d'acétate de vinyle stabilisé avec un polymère d'alcool vinylique, ayant une Tg comprise dans l'intervalle de +10 à +40°C, et ne contenant aucun monomère de préréticulation, et le polymère de seconde étape comprend un homo- ou copolymère de méthacrylate de méthyle ayant une Tg de +50 à +120°C, caractérisé en outre en ce que le rapport du polymère de première étape au polymère de seconde étape est compris dans l'intervalle de 10:1 à 10:6.

2. Adhésif suivant la revendication 1, dans lequel le polymère de seconde étape a une Tg de 80 à 120°C, et dans lequel le rapport du polymère de première étape au polymère de seconde étape est compris dans l'intervalle de 10:3 à 10:4.

3. Adhésif suivant la revendication 1, dans lequel le polymère d'alcool vinylique est présent en une quantité de 0,05 à 4 % en poids de l'émulsion totale.

4. Adhésif suivant la revendication 1, dans lequel sont présentes en outre dans le polymère en émulsion jusqu'à 4 parties en poids d'un acide alcénoïque ou alcènedioïque ayant 3 à 6 atomes de carbone pour 100 parties des monomères du polymère en émulsion.

5. Adhésif pour le travail du bois suivant la revendication 1, caractérisé en ce que le polymère de première étape comprend un copolymère poly(acétate de vinyle)-N-méthylolacrylamide ayant une Tg comprise dans l'intervalle de +30 à 40°C, et le polymère de seconde étape est un copolymère méthacrylate de méthyle - N-méthylolacrylamide - cyanurate de triallyle ayant une Tg de +100 à +120°C, le rapport du premier polymère au second polymère étant compris dans l'intervalle de 10:3 à 10:4.

6. Adhésif pour le travail du bois suivant la revendication 1, caractérisé en ce que le polymère en émulsion est formulé avec au moins un membre du groupe consistant en résines de formaldéhyde, résines phénoliques à l'état B et adjuvants de fusion.

7. Adhésif pour le travail du bois suivant la revendication 6, dans lequel est également présent un durcisseur consistant en un sel métallique acide en une quantité de 0,003 à 0,12 équivalent-gramme pour 100 grammes de l'adhésif.